# EUROPÄISCHE PATENTSCHRIFT

(11) **EP 2 944 442 B1**
(45) Veröffentlichungstag und Bekanntmachung des Hinweises auf die Patenterteilung: **10.05.2017**
(21) Anmeldenummer: 15000916.5
(22) Anmeldetag: 28.03.2015
(51) Int. Cl.: B27B 17/10, F16D 43/18

(54) **HANDGEFÜHRTES ARBEITSGERÄT MIT EINER KUPPLUNG UND VERFAHREN ZUR HERSTELLUNG EINER NUT IN DER UMFANGSWAND EINER KUPPLUNGSTROMMEL EINES HANDGEFÜHRTEN ARBEITSGERÄTS**
HAND TOOL HAVING A CLUTCH AND METHOD FOR FORMING A GROOVE IN PERIPHERAL WALL OF A CLUTCH DRUM OF A HANDHELD POWER TOOL
OUTIL À MAIN MOTORISÉ DOTÉ D'UN EMBRAYAGE ET PROCÉDÉ DE FABRICATION D'UNE RAINURE DANS LA PAROI PÉRIPHÉRIQUE D'UNE CLOCHE D'EMBRAYAGE D'UN OUTIL À MAIN MOTORISÉ

(30) Priorität: 05.04.2014 DE 102014004930
(43) Veröffentlichungstag der Anmeldung: 18.11.2015
(73) Patentinhaber: Andreas Stihl AG & Co. KG, 71336 Waiblingen (DE)
(72) Erfinder: Wolf, Günter, D-71570 Oppenweiler (DE); Förster, Marcel, D-71409 Schwaikheim (DE)
(74) Vertreter: Reinhardt, Annette

(56) Entgegenhaltungen:
- WO-A1-2009/082276
- DE-A1- 3 341 834
- US-A1- 2013 151 126

## Beschreibung

Die Erfindung betrifft ein handgeführtes Arbeitsgerät mit einer Kupplung und ein Verfahren zur Herstellung einer Nut in der Umfangswand einer Kupplungstrommel eines handgeführten Arbeitsgeräts.

Aus der DE 33 41 834 A1 ist ein handgeführtes Arbeitsgerät, nämlich eine Motorkettensäge bekannt, das eine Schmierölpumpe und eine Kupplung mit einer Kupplungstrommel aufweist. Die Schmierölpumpe ist mit der Kupplungstrommel über eine Kupplungsfeder lösbar verbunden, die zwischen Mitnahmezähnen am Randbereich der Umfangswand der Kupplungstrommel eingreift. Es ist auch bekannt, anstatt der Mitnahmezähne eine einzige Nut an der Umfangswand der Kupplungstrommel vorzusehen.

Die DE 195 36 259 A1 offenbart eine Eingriffsstruktur einer Verbindungshülse eines Automatikgetriebes. Die Verbindungshülse ist mit Ausschnitten einer Kupplungstrommel in Eingriff. Die Verbindungshülse besitzt Aussparungen, die über die gesamte Länge ihrer Kante lokal verstärkt sind. Dadurch soll die Fläche des Berührungsabschnitts vergrößert werden, um mit geringerem Oberflächendruck das gleiche Drehmoment übertragen zu können.

Der Erfindung liegt die Aufgabe zugrunde, ein handgeführtes Arbeitsgerät der gattungsgemäßen Art zu schaffen, dessen Kupplungstrommel eine hohe Standzeit besitzt. Eine weitere Aufgabe der Erfindung besteht darin, ein Verfahren zur Herstellung einer Nut in der Umfangswand einer Kupplungstrommel eines handgeführten Arbeitsgeräts anzugeben, mit dem eine Kupplungstrommel mit hoher Standzeit herstellbar ist.

Diese Aufgabe wird bezüglich des handgeführten Arbeitsgeräts durch ein Arbeitsgerät mit den Merkmalen des Anspruchs 1 gelöst. Bezüglich des Verfahrens wird die Aufgabe durch ein Verfahren mit den Merkmalen des Anspruchs 15 gelöst.

Es hat sich gezeigt, dass sich eine deutlich erhöhte Standzeit einer Kupplungstrommel erreichen lässt, wenn die Umfangswand der Kupplungstrommel am Nutgrund einen verdickten Bereich aufweist, dessen Dicke mindestens etwa 110% der Dicke der Umfangswand an den Nutseiten entspricht. Die Umfangswand ist demnach am Nutgrund der Nut gegenüber den Nutseiten verdickt. Durch die Anordnung des verdickten Bereichs am Nutgrund kann die Entstehung eines Risses in der Umfangswand, der unter Belastung üblicherweise ausgehend vom Nutgrund entsteht, weitgehend verhindert werden. Es hat sich auch gezeigt, dass an den Nutseiten keine dem verdickten Bereich am Nutgrund entsprechende Aufdickung notwendig ist. Dadurch wird der Bereich, an dem das Mitnahmeglied sich abstützt, vorteilhaft nicht verändert, so dass die Kupplungstrommel mit bekannten Mitnahmegliedern eingesetzt werden kann. Ein verdickter Bereich, der sich im Wesentlichen am Nutgrund erstreckt, ist einfach herstellbar.

Vorteilhaft beträgt die Dicke des verdickten Bereichs weniger als etwa 200% der Dicke der Umfangswand an den Nutseiten, insbesondere weniger als etwa 150% der Dicke der Umfangswand an den Nutseiten. Dadurch kann eine vergleichsweise geringe Gesamtdicke der Umfangswand am Nutgrund erreicht werden, so dass die Innenseite der Kupplungstrommel und die Außenseite der Umfangswand der Kupplungstrommel für weitere Funktionen, beispielsweise zur Anlage von Fliehgewichten oder zur Anlage eines Bremsbands, genutzt werden können.

Vorteilhaft beträgt die parallel zur Drehachse der Kupplung gemessene Breite des verdickten Bereichs von etwa 0,8 mm bis etwa 2,0 mm. Die Breite des verdickten Bereichs beträgt insbesondere von etwa 1,2 mm bis etwa 1,8 mm. Dadurch, dass die Breite des verdickten Bereichs vergleichsweise gering ist, wird die Breite des Bereichs der Umfangswand der Kupplungstrommel, der für andere Funktionen wie beispielsweise die Anlage der Fliehgewichte oder die Anlage eines Bremsbands ausgebildet ist, nur geringfügig verringert. Die in Umfangsrichtung gemessene Länge des verdickten Bereichs beträgt vorteilhaft von etwa 50% bis etwa 200% der Breite der Nut, insbesondere von etwa 70% bis etwa 150% der Breite der Nut.

Vorteilhaft erstreckt sich der verdickte Bereich mindestens teilweise auf die Innenseite der Umfangswand. Die Innenseite der Umfangswand ist am Nutgrund vorteilhaft gegenüber der Innenseite an den Nutseiten erhöht. Die Erhöhung an der Innenseite der Umfangswand beträgt dabei vorteilhaft von etwa 0,05 mm bis etwa 0,3 mm, insbesondere von etwa 0,1 mm bis etwa 0,2 mm. Vorteilhaft erstreckt sich der verdickte Bereich alternativ oder zusätzlich an die Außenseite der Umfangswand. Die Außenseite der Umfangswand am Nutgrund ist vorteilhaft gegenüber der Außenseite an den Nutseiten erhöht. Die Erhöhung an der Außenseite der Umfangswand beträgt vorteilhaft von etwa 0,05 mm bis etwa 0,3 mm, insbesondere von etwa 0,1 mm bis etwa 0,2 mm. Besonders vorteilhaft ist die Erhöhung an der Außenseite der Umfangswand sehr gering. Um eine ausreichend große Anlagefläche für ein Bremsband am Außenumfang der Umfangswand zu erhalten, ist vorteilhaft vorgesehen, dass die Außenseite der Umfangswand am Nutgrund gegenüber der Umfangswand an den Nutseiten um weniger als 0,1 mm erhöht ist. Insbesondere geht die Außenseite am Nutgrund etwa eben in den umgebenden Bereich der Umfangswand über. Vorteilhaft ist die Umfangswand in dem an die Nutseiten angrenzenden Bereich nicht verdickt.

Um die Montage des Mitnahmeglieds zu vereinfachen, ist vorteilhaft vorgesehen, dass die Nutseiten an ihren an die Stirnseite der Kupplungstrommel angrenzenden Bereichen in einem zur Stirnseite öffnenden Winkel zueinander verlaufen. Vorteilhaft beträgt der Winkel zwischen den Nutseiten mindestens etwa 10°. Vorzugsweise beträgt der Winkel mindestens etwa 20°, insbesondere mindestens etwa 25°. Vorteilhaft ist der Winkel zwischen den Nutseiten kleiner als 90°. Die Nutseiten sind insbesondere spiegelsymmetrisch zueinander ausgebildet. Das angetriebene Element ist vorteilhaft eine Pumpe, insbesondere eine Schmierölpumpe zur Förderung von Schmieröl für ein Werkzeug, insbesondere eine Sägekette des handgeführten Arbeitsgeräts, das vorzugsweise als Motorsäge ausgebildet ist.

Vorteilhaft besitzt das Arbeitsgerät eine Bremseinrichtung mit einem Bremsband, das zum Bremsen mit der Außenseite der Umfangswand zusammenwirkt. Vorteilhaft ist die Kupplung eine Fliehkraftkupplung mit mindestens einem Fliehgewicht, wobei das Fliehgewicht in eingekuppeltem Zustand an der Innenseite der Umfangswand anliegt.

Für ein Verfahren zur Herstellung einer Nut in der Umfangswand einer Kupplungstrommel eines handgeführten Arbeitsgeräts ist vorgesehen, dass in einem ersten Schritt die Nut mit einer Tiefe, die etwa 75% bis etwa 95% der Solltiefe der Nut entspricht, und mit einer Breite, die etwa 50% bis etwa 110% der Sollbreite entspricht, ausgestanzt wird, und dass der Nutgrund der Nut in einem nachfolgenden zweiten Schritt bis zum Erreichen der Solltiefe plastisch verformt wird.

Durch die plastische Verformung der Nut am Nutgrund werden die Stanzkanten an der Nut verdichtet. Es ergeben sich ein geringerer Kerbfaktor am Boden der Nut und ein verbesserter Faserverlauf. Die Breite, mit der die Nut ausgestanzt wird, entspricht vorzugsweise etwa 80% bis etwa 100% der Sollbreite der Nut. Die Breite, mit der die Nut ausgestanzt wird, ist dabei vorteilhaft so gewählt, dass an den Nutseiten im Wesentlichen kein verdickter Bereich entsteht. Die Tiefe der ausgestanzten Nut ist vorteilhaft um höchstens 2,0 mm kleiner als die Solltiefe der Nut. Die Tiefe der ausgestanzten Nut ist vorteilhaft um weniger als 1,0 mm, insbesondere um weniger als 0,7 mm kleiner als die Solltiefe. Dadurch werden in dem verdickten Bereich ein geringer Aufwurf und eine geringe Erhöhung der Wandstärke der Umfangswand erreicht. Gleichzeitig wird eine deutliche Erhöhung der Standzeit der Kupplungstrommel erreicht. Die Kupplungstrommel kann mit vergleichsweise geringer Wandstärke hergestellt werden, da sich aufgrund des verdickten Bereichs am Nutgrund eine verringerte Kerbwirkung und so auch bei geringer Wandstärke der Umfangswand eine ausreichend lange Standzeit ergibt.

Ein Ausführungsbeispiel der Erfindung wird im Folgenden anhand der Zeichnung erläutert. Es zeigen:
- Fig. 1: eine schematische, teilgeschnittene Seitenansicht einer Motorsäge,
- Fig. 2: einen schematischen Schnitt durch die Motorsäge aus Fig. 1 im Bereich des Antriebsmotors,
- Fig. 3: eine Seitenansicht einer Fliehkraftkupplung,
- Fig. 4: einen Schnitt entlang der Linie IV-IV in Fig. 3,
- Fig. 5: eine perspektivische Explosionsdarstellung der Pumpe und der Kupplungstrommel der Motorsäge aus Fig. 1,
- Fig. 6: eine Seitenansicht von Pumpe und Kupplungstrommel,
- Fig. 7: einen Schnitt entlang der Linie VII-VII in Fig. 6,
- Fig. 8: eine perspektivische Darstellung der Kupplungstrommel,
- Fig. 9: eine ausschnittsweise perspektivische Darstellung des Bereichs der Umfangswand der Kupplungstrommel, der die Nut aufweist,
- Fig. 10: eine Seitenansicht der Kupplungstrommel,
- Fig. 11: den Bereich XI aus Fig. 10 in vergrößerter Darstellung,
- Fig. 12: einen Schnitt durch die Kupplungstrommel,
- Fig. 13: den Schnitt XIII-XIII in Fig. 12 in vergrößerter Darstellung,
- Fig. 14: den Bereich der Umfangswand, der die Nut aufweist, in vergrößerter Darstellung nach dem Stanzen und vor dem Prägen der Nut.

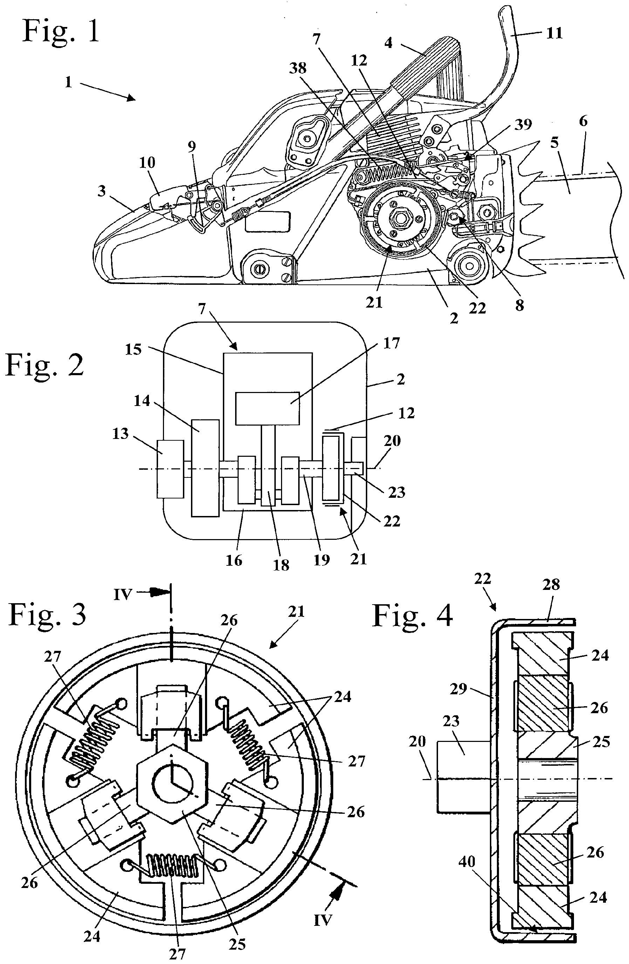

Fig. 1 zeigt als Ausführungsbeispiel für ein handgeführtes Arbeitsgerät eine Motorsäge 1. Die vorliegende Erfindung kann jedoch auch bei einem anderen handgeführten Arbeitsgerät wie beispielsweise einem Freischneider, einem Trennschleifer oder dergleichen zum Einsatz kommen. Die Motorsäge 1 besitzt ein Gehäuse 2, an dem ein hinterer Handgriff 3 und ein Griffbügel 4 zum Führen der Motorsäge 1 im Betrieb festgelegt sind. Am Gehäuse 2 der Motorsäge 1 ist eine Führungsschiene 5 angeordnet, an der eine Sägekette 6 umlaufend angeordnet ist. Die Sägekette 6 ist von einem im Gehäuse 2 angeordneten Antriebsmotor 7 angetrieben. Im Ausführungsbeispiel ist der Antriebsmotor 7 ein Verbrennungsmotor. Zur Bedienung des Antriebsmotors 7 sind am hinteren Handgriff 3 ein Gashebel 9 und eine Gashebelsperre 10 schwenkbar gelagert. Der Antriebsmotor 7 treibt die Sägekette 6 über eine Kupplung 21 an, die im Ausführungsbeispiel als Fliehkraftkupplung ausgebildet ist. Die Motorsäge 1 besitzt eine Bremseinrichtung 8, mit der die Sägekette 6 gebremst werden kann. Zum Auslösen der Bremseinrichtung 8 dient ein Handschutz 11, der an der der Führungsschiene 5 zugewandten Seite des Griffbügels 4 schwenkbar am Gehäuse 2 gelagert ist. Die Bremseinrichtung 8 umfasst ein Bremsband 12, das am Außenumfang einer Kupplungstrommel 22 der Kupplung 21 angeordnet ist. Die Bremseinrichtung 8 besitzt eine Bremsfeder 38, die zum Bremsen auf das Bremsband 12 wirkt und das Bremsband 12 am Außenumfang der Kupplungstrommel 22 festzieht. Die Bremsfeder 38 ist bei der Inbetriebnahme der Motorsäge 1 zu spannen. Um die Bremsfeder 38 in gespanntem Zustand zu halten, ist ein Kniehebelmechanismus 39 vorgesehen, auf den der Handschutz 11 zum Auslösen der Bremseinrichtung 8 wirkt.

Fig. 2 zeigt den Antrieb der Sägekette 6 der Motorsäge 1 im Einzelnen. Der Antriebsmotor 7 besitzt einen Zylinder 15, in dem ein Kolben 17 hin- und hergehend gelagert ist. Der Kolben 17 treibt über einen Pleuel 18 eine in einem Kurbelgehäuse 16 drehbar gelagerte Kurbelwelle 19 um eine Drehachse 20 an. An der Kurbelwelle 19 ist ein Lüfterrad 14 zur Förderung von Kühlluft festgelegt. Anstatt des Lüfterrads 14 kann auch ein Schwungrad ohne Lüfterflügel vorgesehen sein. An der dem Antriebsmotor 7 abgewandten Seite des Lüfterrads 14 ist eine Anwerfvorrichtung 13 für den Antriebsmotor 7 vorgesehen. Die Anwerfvorrichtung 13 kann beispielsweise ein von Hand zu startender Seilzugstarter oder eine elektrisch angetriebene Anwerfvorrichtung sein. An der dem Lüfterrad 14 abgewandt liegenden Seite des Antriebsmotors 7 ist die Kupplung 21 angeordnet. In Fig. 2 sind auch die Kupplungstrommel 22 sowie das am Außenumfang der Kupplungstrommel 22 angeordnete Bremsband 12 schematisch gezeigt. An der Kupplungstrommel 22 ist ein Antriebsritzel 23 festgelegt, das zum Antrieb der Sägekette 6 dient.

Die Figuren 3 und 4 zeigen den Aufbau der Kupplung 21 im Einzelnen. Die Kupplung 21 besitzt ein Trägerteil 25, an dem im Ausführungsbeispiel drei Fliehgewichte 24 radial nach außen beweglich angeordnet sind. Die Fliehgewichte 24 können auch zur radialen Richtung geneigt verschiebbar oder schwenkbeweglich angeordnet sein. Im Ausführungsbeispiel sind am Trägerteil 25 Arme 26 vorgesehen, die radial nach außen auskragen und an denen die Fliehgewichte 24 geführt sind. Zwischen benachbarten Fliehgewichten 24 wirkt jeweils eine Feder 27, die im Ausführungsbeispiel als Schraubenzugfeder ausgebildet ist und die die Fliehgewichte 24 in ihre radial innenliegende Stellung vorspannt. Mit steigender Drehzahl bewegen sich die Fliehgewichte 24 entgegen der Kraft der Federn 27 radial nach außen, bis sie zur Anlage an einer in Fig. 4 gezeigten Umfangswand 28 der Kupplungstrommel 22 kommen. Sobald die Fliehgewichte 24 reibschlüssig mit der Umfangswand 28 verbunden sind, wird die Sägekette 6 über das fest mit der Kupplungstrommel 22 verbundene Antriebsritzel 23 angetrieben. Die Fliehgewichte 24 liegen dabei an einer Innenseite 40 der Umfangswand 28 an. Die Kupplungstrommel besitzt eine Seitenwand 29, die etwa senkrecht zur Drehachse 20 ausgerichtet ist und an der im Ausführungsbeispiel das Antriebsritzel 23 fixiert ist.

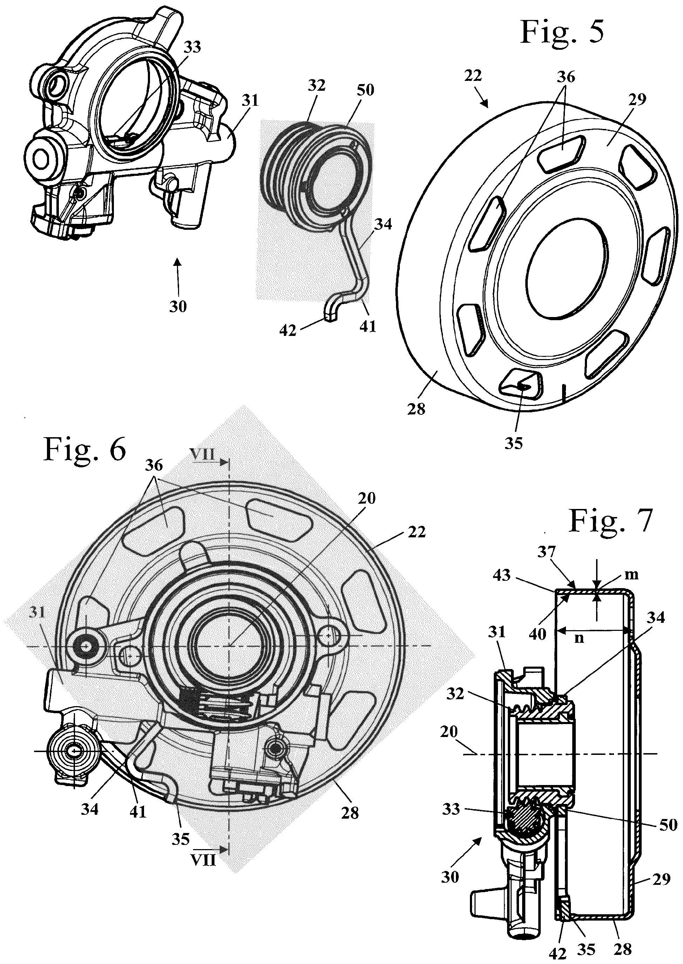

Die Motorsäge 1 besitzt zur Förderung von Schmieröl für die Sägekette 6 eine Pumpe 30, die in Fig. 5 gezeigt ist. Die Pumpe 30 ist vom Antriebsmotor 7 angetrieben. Um zu vermeiden, dass die Pumpe 30 im Leerlauf des Antriebsmotors 7 Schmieröl fördert, ist die Pumpe 30 mit der Kupplungstrommel 22 gekoppelt. Die Kupplungstrommel 22 besitzt in der Umfangswand 28 eine Nut 35, die etwa parallel zur Drehachse 20 (Fig. 2) verläuft. Die Pumpe 30 besitzt ein Mitnahmeglied 34, das im Ausführungsbeispiel als Schlingfeder ausgebildet ist. Das Mitnahmeglied 34 besitzt ein freies Ende 42, das zur Drehmitnahme in die Nut 35 ragt. Sobald die Kupplung 21 geschlossen ist und die Kupplungstrommel 22 um die Drehachse 20 angetrieben wird, wird auch das Mitnahmeglied 34 mitgenommen.

Wie Fig. 5 zeigt, ist das Mitnahmeglied 34 an einem Schneckenrad 32 der Pumpe 30 angeordnet. Das Mitnahmeglied 34 besitzt einen Mitnahmeabschnitt 50, der ringförmig ausgebildet ist und einen Abschnitt des Schneckenrads 32 umschlingt. In unbelastetem Zustand umschlingt das Mitnahmeglied 34 das Schneckenrad 32 mit seinem Mitnahmeabschnitt 50 lose und lässt eine Relativdrehung des Schneckenrads 32 gegenüber dem Mitnahmeglied 34 zu. Wird das freie Ende 42 des Mitnahmeglieds 34 in Fig. 5 nach links von der Kupplungstrommel 22 mitgenommen, so zieht sich der ringförmige Mitnahmeabschnitt 50 zusammen und stellt dadurch eine reibschlüssige Verbindung zum Schneckenrad 32 her. Das Schneckenrad 32 ist in Eingriff mit einem Pumpenritzel 33, das in einem Gehäuse 31 der Pumpe 30 angeordnet ist und das in bekannter Weise Schmieröl fördert. Die Pumpe 30 fördert dadurch nur bei rotierender Kupplungstrommel 22 Schmieröl. Anstatt der Pumpe 30 kann die Motorsäge 1 auch ein anderes von der Kupplungstrommel 22 über das Mitnahmeglied 34 angetriebenes Element besitzen.

Wie die Figuren 5 und 6 zeigen, besitzt die Kupplungstrommel 22 in der Seitenwand 29 eine Vielzahl von Öffnungen 36, die zur Gewichtseinsparung dienen. Wie Fig. 6 zeigt, besitzt das Mitnahmeglied 34 einen Abstützbereich 41, mit dem sich das Mitnahmeglied 34 an der Umfangswand 28 der Kupplungstrommel 22 abstützt. Die Stelle, an der sich das Mitnahmeglied 34 an der Umfangswand 28 abstützt, ist dabei in Umfangsrichtung zur Nut 35 beabstandet. Durch die Abstützung am Abstützbereich 41 erhält das Mitnahmeglied 34 eine ausreichende Stabilität zur Übertragung des Antriebsmoments auf die Pumpe 30.

Fig. 7 zeigt die Anordnung des Mitnahmeabschnitts 50 am Außenumfang des Schneckenrads 32 sowie den Eingriff des Schneckenrads 32 mit dem Pumpenritzel 33. Wie Fig. 7 zeigt, besitzt die Umfangswand 28 der Kupplungstrommel 22 in einem von der Nut 35 entfernt liegenden Bereich eine Dicke m. An ihrer nach außen weisenden Seite besitzt die Umfangswand 28 eine Außenseite 37. Die Umfangswand 28 besitzt an der der Seitenwand 29 gegenüberliegenden Seite eine Stirnseite 43. Die Kupplungstrommel 22 besitzt eine Breite n, die parallel zur Drehachse 20 und von der Stirnseite 43 bis zur Außenseite der Seitenwand 29 gemessen ist. Die Breite n kann beispielsweise etwa 10 mm bis etwa 30 mm, vorzugsweise etwa 15 mm bis etwa 25 mm betragen. Die Breite n ist dabei in einem radial äußeren Bereich der Kupplungstrommel 22 gemessen.

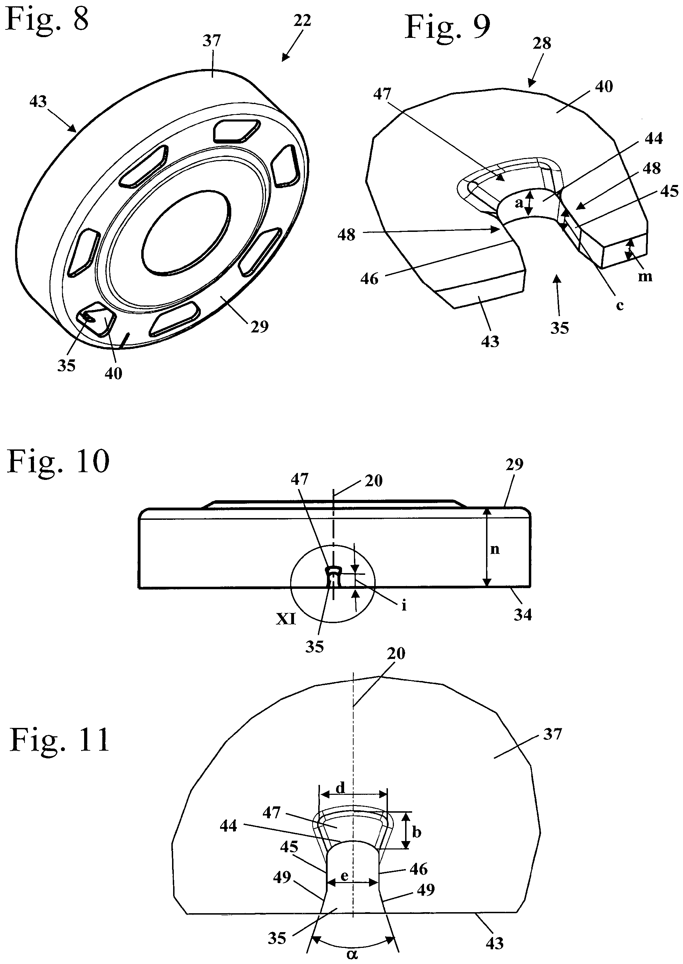

Die Figuren 8 bis 13 zeigen die Kupplungstrommel 22 im Einzelnen. Wie Fig. 9 zeigt, besitzt die Nut 35 einander gegenüberliegende Nutseiten 45 und 46, die an einem Nutgrund 44 miteinander verbunden sind. Die Nutseiten 45 und 46 bilden mit dem Nutgrund 44 im Ausführungsbeispiel ein U. Benachbart zum Nutgrund 44 ist an der Umfangswand 28 ein verdickter Bereich 47 angeordnet. Der verdickte Bereich 47 ist zwischen der Nut 35 und der Seitenwand 29 angrenzend an den Nutgrund 44 angeordnet. Die Dicke a des verdickten Bereichs 44 beträgt mindestens etwa 110% der Dicke c der Umfangswand an den Nutseiten 45 und 46. Die Dicke a und die Dicke c sind dabei in radialer Richtung zur Drehachse 20 (Fig. 7) gemessen. Die Dicke a des verdickten Bereichs 47 beträgt vorteilhaft weniger als etwa 200% der Dicke c der Umfangswand 28 an den Nutseiten 45, 46, insbesondere weniger als etwa 150% der Dicke c. Im Ausführungsbeispiel entspricht die Dicke c der Dicke m der Umfangswand 28 in einem von der Nut 35 entfernt liegenden Bereich. Im Ausführungsbeispiel geht die Umfangswand 28 eben in die Nutseiten 45 und 46 über. In den an die Nutseiten 46 und 45 angrenzenden Bereichen 48 ist die Umfangswand 28 nicht verdickt. Die Dicke m der Umfangswand 28 beträgt vorteilhaft weniger als etwa 1,25 mm.

Wie Fig. 10 zeigt, besitzt die Nut 35 eine parallel zur Drehachse 20 gemessene Tiefe i. Die Tiefe i der Nut 35 beträgt dabei vorteilhaft von etwa 12% bis etwa 25%, insbesondere von etwa 15% bis etwa 20% der Breite n der Kupplungstrommel 22. Die Breite n der Kupplungstrommel 22 ist dabei von der Stirnseite 43 bis zur Außenseite der Seitenwand 29 in einem bezogen auf die Drehachse 20 radial außenliegenden Bereich der Seitenwand 29 gemessen. Die Tiefe i der Nut 35 beträgt vorteilhaft von etwa 2,0 mm bis etwa 4,0 mm, insbesondere von etwa 2,5 mm bis etwa 3,5 mm.

Fig. 11 zeigt die Gestaltung der Nut 35 im Einzelnen. In einem an die Stirnseite 43 angrenzenden Bereich 49 öffnet die Nutseite 45 zur Stirnseite 43 hin. Entsprechend verläuft der an die Stirnseite 43 angrenzende Bereich 49 der Nutseite 46 von der gegenüberliegenden Nutseite 45 weg. Die beiden Bereiche 49 der Nutseiten 45 und 46 schließen miteinander einen Winkel α ein, der vorteilhaft mindestens etwa 10° beträgt. Der Winkel α beträgt insbesondere mindestens etwa 20°, vorzugsweise mindestens etwa 25°. Vorteilhaft ist der Winkel α kleiner als 90°. Die Bereiche 49 erstrecken sich vorteilhaft über etwa 20% bis etwa 60% der in Fig. 10 gezeigten Tiefe i der Nut 35. In dem zwischen den Bereichen 49 und dem Nutgrund 44 angeordneten Abschnitt verlaufen die Nutseiten 45, 46 vorteilhaft parallel zueinander und parallel zur Drehachse 20.

Die Nut 35 besitzt eine Breite e, die in einer zwischen den Bereichen 49 und dem Nutgrund 44 angeordneten Ebene senkrecht zur Drehachse 20 gemessen ist. Die Breite e ist vorteilhaft kleiner als die Tiefe i. Die Breite e kann beispielsweise von etwa 1,0 mm bis etwa 3,0 mm betragen. Fig. 11 zeigt auch die Abmessungen des verdickten Bereichs 47 am Nutgrund 44. Der verdickte Bereich 47 besitzt eine parallel zur Drehachse 20 und in Richtung der Tiefe i (Fig. 10) gemessene Breite b, die vorteilhaft von etwa 0,8 mm bis etwa 2,0 mm, insbesondere von etwa 1,2 mm bis etwa 1,8 mm beträgt. Der verdickte Bereich 47 besitzt eine in Umfangsrichtung gemessene Länge d, die vorteilhaft von etwa 50% bis etwa 200% der Breite e der Nut 35 beträgt. Vorteilhaft beträgt die Länge d von etwa 70% bis etwa 150% der Breite e der Nut 35. Wie Fig. 11 zeigt, erstreckt sich der verdickte Bereich 47 angrenzend an den Nutgrund 44 in Richtung auf die Seitenwand 29. Der verdickte Bereich 47, dessen Breite b von etwa 0,8 mm bis etwa 2,0 mm beträgt und dessen Länge d von etwa 50% bis etwa 200% der Breite e der Nut 35 beträgt, dabei der Bereich der Umfangswand 28, dessen Dicke a mindestens 110% der Dicke c der Umfangswand 28 an den Nutseiten 44 und 45 entspricht. Vorteilhaft geht der verdickte Bereich 47 abgeschrägt oder gebogen in die Umfangswand 28 über und bildet zu dieser keine Stufe.

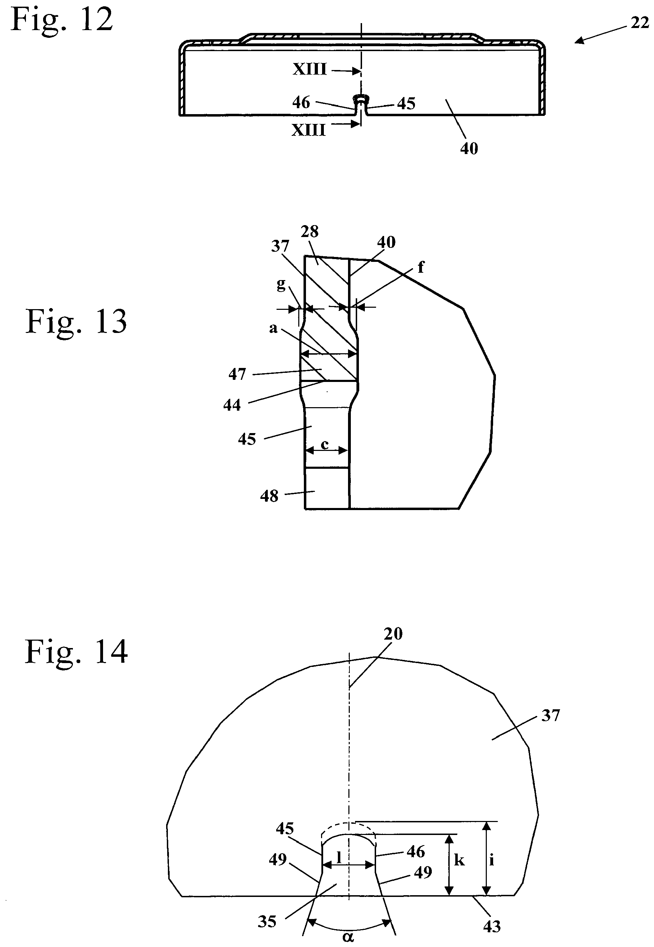

Wie Fig. 13 zeigt, ist die Umfangswand 28 im verdickten Bereich 47 sowohl an der Außenseite 37 als auch an der Innenseite 40 erhöht. Der verdickte Bereich 47 besitzt an der Außenseite 37 eine Erhöhung g, die vorteilhaft von etwa 0,05 mm bis etwa 0,3 mm, insbesondere von etwa 0,1 mm bis etwa 0,2 mm beträgt. Der verdickte Bereich 47 besitzt an der Innenseite 40 eine Erhöhung f, die vorteilhaft ebenfalls von etwa 0,05 mm bis etwa 0,3 mm, insbesondere von etwa 0,1 mm bis etwa 0,2 mm beträgt. Besonders vorteilhaft ist die Erhöhung f größer als die Erhöhung g. Insbesondere ist an der Außenseite 37 keine Erhöhung g vorhanden, so dass die Umfangswand 28 an der Außenseite 37 eben bis zum Nutgrund 44 verläuft. Wie Fig. 13 auch zeigt, ist die Umfangswand 28 an der Nutseite 45 nicht verdickt ausgebildet, sondern besitzt hier die Dicke c, die der Dicke m der Umfangswand 28 in einem zur Nut 35 entfernt liegenden Bereich entspricht. Wie Fig. 11 zeigt, ist die Nut 35 spiegelsymmetrisch zu einer senkrecht zur Stirnseite 43 verlaufenden Mittelachse ausgebildet.

Um eine vergleichsweise geringe Dicke a des verdickten Bereichs 47 und gleichzeitig eine ausreichende Materialverfestigung am Nutgrund 44 zu erreichen, ist für die Herstellung der Nut 35 vorgesehen, dass die Nut 35 zunächst aus der Kupplungstrommel 22 ausgestanzt wird. Hierzu wird die Nut 35 mit den in Fig. 14 eingezeichneten Maßen gestanzt. Die Nut 35 besitzt nach dem Stanzen eine in Umfangsrichtung gemessene Breite 1, die etwa 5% bis etwa 110% der Sollbreite e der fertiggestellten Nut 35 entspricht. Die Breite 1 entspricht vorteilhaft etwa 80% bis etwa 100% der Sollbreite e. Die Nut 35 wird mit einer Tiefe k gestanzt, die kleiner als die Solltiefe i der fertigen Nut 35 ist. Die Tiefe k der gestanzten Nut beträgt vorteilhaft etwa 75% bis etwa 95% der Solltiefe i. Die Solltiefe i ist in Fig. 14 mit gestrichelter Linie eingezeichnet. Die Nut 35 wird dabei vorteilhaft mit den im Winkel α zueinander verlaufenden geneigten Bereichen 49 gestanzt.

In einem nachfolgenden Verfahrensschritt wird der Nutgrund 44 der Nut 35 bis zum Erreichen der Solltiefe i plastisch verformt. Dabei werden die Erhöhungen f und g (Fig. 13) aufgeworfen, und der verdickte Bereich 47 wird gebildet. Das Werkzeug zur plastischen Verformung, beispielsweise ein Prägestempel, ist dabei vorteilhaft so ausgebildet, dass an den Nutseiten 45 und 46 keine oder nur eine sehr geringe plastische Verformung auftritt, so dass an den Nutseiten 45 und 46 kein oder nur ein sehr geringer verdickter Bereich entsteht. Die Tiefe k der ausgestanzten Nut 35 ist vorteilhaft um höchstens 2,0 mm, insbesondere um weniger als 1,0 mm, vorzugsweise um weniger als 0,7 mm kleiner als die Solltiefe i. Dadurch, dass die plastische Verformung und damit auch die Erhöhungen f und g vergleichsweise gering sind, wird die Anlage des Bremsbands 12 (Fig. 1) an der Außenseite der Kupplungstrommel 22 nicht erschwert, und der Kontakt der Fliehgewichte 24 zur Umfangswand 28 wird nicht verschlechtert.

## Patentansprüche

1. Handgeführtes Arbeitsgerät mit einem Antriebsmotor (7), der über eine Kupplung (21) ein Werkzeug antreibt, wobei die Kupplung (21) eine Kupplungstrommel (22) mit einer Umfangswand (28) aufweist, wobei das Arbeitsgerät ein angetriebenes Element umfasst, das über ein Mitnahmeglied (34) angetrieben ist, wobei das Mitnahmeglied (34) in eine Nut (35) in der Umfangswand (28) der Kupplung (21) ragt, wobei die Nut (35) sich von einer Stirnseite (43) der Umfangswand (28) in die Umfangswand (28) erstreckt und einen Nutgrund (44) und zwei einander gegenüberliegende Nutseiten (45, 46) aufweist,
**dadurch gekennzeichnet, dass** die Umfangswand (28) am Nutgrund (44) einen verdickten Bereich (47) aufweist, dessen Dicke (a) mindestens etwa 110% der Dicke (c) der Umfangswand (28) an den Nutseiten (44, 45) entspricht.

2. Arbeitsgerät nach Anspruch 1,
**dadurch gekennzeichnet, dass** die parallel zur Drehachse (20) der Kupplung (21) gemessene Breite (b) des verdickten Bereichs (47) von etwa 0,8 mm bis etwa 2,0 mm beträgt.

3. Arbeitsgerät nach Anspruch 1 oder 2,
**dadurch gekennzeichnet, dass** die in Umfangsrichtung gemessene Länge (d) des verdickten Bereichs (47) von etwa 50% bis etwa 200% der Breite (e) der Nut (35) beträgt.

4. Arbeitsgerät nach einem der Ansprüche 1 bis 3,
**dadurch gekennzeichnet, dass** die Innenseite (40) der Umfangswand (28) am Nutgrund (44) gegenüber der Innenseite (40) an den Nutseiten (45, 46) erhöht ausgebildet ist.

5. Arbeitsgerät nach Anspruch 4,
**dadurch gekennzeichnet, dass** die Erhöhung (f) an der Innenseite (40) der Umfangswand (28) von etwa 0,05 mm bis etwa 0,3 mm beträgt.

6. Arbeitsgerät nach einem der Ansprüche 1 bis 5,
**dadurch gekennzeichnet, dass** die Außenseite (37) der Umfangswand (28) am Nutgrund (44) gegenüber der Außenseite (37) an den Nutseiten (45, 46) erhöht ist.

7. Arbeitsgerät nach Anspruch 6,
**dadurch gekennzeichnet, dass** die Erhöhung (g) an der Außenseite (37) der Umfangswand (28) von etwa 0,05 mm bis etwa 0,3 mm beträgt.

8. Arbeitsgerät nach einem der Ansprüche 1 bis 7,
**dadurch gekennzeichnet, dass** die Umfangswand (28) in dem an die Nutseiten (45, 46) angrenzenden Bereich (48) nicht verdickt ist.

9. Arbeitsgerät nach einem der Ansprüche 1 bis 8,
**dadurch gekennzeichnet, dass** die Nutseiten (45, 46) an ihren an die Stirnseite (43) angrenzenden Bereichen (49, 50) in einem zur Stirnseite (43) öffnenden Winkel (α) zueinander verlaufen.

10. Arbeitsgerät nach Anspruch 9,
**dadurch gekennzeichnet, dass** der Winkel (α) mindestens etwa 10° beträgt.

11. Arbeitsgerät nach einem der Ansprüche 1 bis 10,
**dadurch gekennzeichnet, dass** die Nutseiten (45, 46) spiegelsymmetrisch zueinander ausgebildet sind.

12. Arbeitsgerät nach einem der Ansprüche 1 bis 11,
**dadurch gekennzeichnet, dass** das angetriebene Element eine Pumpe (30) ist.

13. Arbeitsgerät nach einem der Ansprüche 1 bis 12,
**dadurch gekennzeichnet, dass** das Arbeitsgerät eine Bremseinrichtung (8) mit einem Bremsband (12) umfasst, das zum Bremsen mit der Außenseite (37) der Umfangswand (28) zusammenwirkt.

14. Arbeitsgerät nach einem der Ansprüche 1 bis 13,
**dadurch gekennzeichnet, dass** die Kupplung (21) eine Fliehkraftkupplung mit mindestens einem Fliehgewicht (24) ist, wobei das Fliehgewicht (24) in eingekuppeltem Zustand an der Innenseite (40) der Umfangswand (28) anliegt.

15. Verfahren zur Herstellung einer Nut in der Umfangswand einer Kupplungstrommel eines handgeführten Arbeitsgeräts nach einem der Ansprüche 1 bis 14,
**dadurch gekennzeichnet, dass** in einem ersten Schritt die Nut (35) mit einer Tiefe (k), die etwa 75% bis etwa 95% der Solltiefe (i) der Nut (35) entspricht, und mit einer Breite (1), die etwa 50% bis etwa 110% der Sollbreite (e) entspricht, ausgestanzt wird, und dass der Nutgrund (44) der Nut (35) in einem nachfolgenden zweiten Schritt bis zum Erreichen der Solltiefe (i) plastisch verformt wird.

16. Verfahren nach Anspruch 15,
**dadurch gekennzeichnet, dass** die Tiefe (k) der ausgestanzten Nut (35) um höchstens 2,0 mm kleiner als die Solltiefe (i) ist.

## Claims

1. Hand-guided working implement, comprising a drive motor (7) driving a tool via a clutch (21), wherein the clutch (21) comprises a clutch drum (22) with a circumferential wall (28), wherein the working implement comprises a driven element driven via a driving member (34), wherein the driving member (34) projects into a groove (35) in the circumferential wall (28) of the clutch (21), wherein the groove (35) extends from an end face (43) of the circumferential wall (28) into the circumferential wall (28) and has a groove bottom (44) and two groove sides (45, 46) arranged opposite each other,
**characterised in that** the circumferential wall (28) has at the groove bottom (44) a thickened region (47), the thickness (a) of which corresponds at least to approximately 110% of the thickness (c) of the circumferential wall (28) at the groove sides (44, 45).

2. Working implement according to claim 1,
**characterised in that** the width (b) of the thickened region (47) as measured parallel to the axis of rotation (20) of the clutch (21) is approximately 0.8 mm to approximately 2.0 mm.

3. Working implement according to claim 1 or 2,
**characterised in that** the length (d) of the thickened region (47) as measured in the circumferential direction is approximately 50% to approximately 200% of the width (e) of the groove (35).

4. Working implement according to any of claims 1 to 3,
**characterised in that** the inside (40) of the circumferential wall (28) at the groove bottom (44) is raised compared to the inside (40) at the groove sides (45, 46).

5. Working implement according to claim 4,
**characterised in that** the elevation (f) at the inside (40) of the circumferential wall (28) is approximately 0.05 mm to approximately 0.3 mm.

6. Working implement according to any of claims 1 to 5,
**characterised in that** the outside (37) of the circumferential wall (28) at the groove bottom (44) is raised compared to the outside (37) at the groove sides (45, 46).

7. Working implement according to claim 6,
**characterised in that** the elevation (g) at the outside (37) of the circumferential wall (28) is approximately 0.05 mm to approximately 0.3 mm.

8. Working implement according to any of claims 1 to 7,
**characterised in that** the circumferential wall (28) is not thickened in the region (48) adjoining the groove sides (45, 46).

9. Working implement according to any of claims 1 to 8,
**characterised in that** the groove sides (45, 46) extend at an angle (α) opening towards the end face (43) to each other in the regions (49, 50) adjoining the end face (43).

10. Working implement according to claim 9,
**characterised in that** the angle (α) is at least approximately 10°.

11. Working implement according to any of claims 1 to 10,
**characterised in that** the groove sides (45, 46) are designed to be mutually mirror-symmetric.

12. Working implement according to any of claims 1 to 11,
**characterised in that** the driven element is a pump (30).

13. Working implement according to any of claims 1 to 12,
**characterised in that** the working implement comprises a braking device (8) with a brake band (12), which acts together with the outside (37) of the circumferential wall (28) for braking.

14. Working implement according to any of claims 1 to 13,
**characterised in that** the clutch (21) is a centrifugal clutch with at least one flyweight (24), the flyweight (24) bearing against the inside (40) of the circumferential wall (28) in the engaged state.

15. Method for producing a groove in the circumferential wall of a clutch drum of a hand-guided working implement according to any of claims 1 to 14, **characterised in that** in a first step the groove (35) is stamped out with a depth (k) which corresponds to approximately 75% to approximately 95% of the set depth (i) of the groove (35) and with a width (1) which corresponds to approximately 50% to approximately 110% of the set width (e), and **in that** the groove bottom (44) of the groove (35) is plastically deformed in a subsequent second step until the set depth (i) is reached.

16. Method according to claim 15,
**characterised in that** the depth (k) of the stamped-out groove (35) is maximally 2.0 mm less than the set depth (i).

## Revendications

1. Instrument de travail à main avec un moteur d'entraînement (7) qui entraîne un outil par l'intermédiaire d'un embrayage (21), l'embrayage (21) comportant un tambour d'embrayage (22) avec une paroi périphérique (28), l'instrument de travail comprenant un élément entraîné qui est entraîné par l'intermédiaire d'un organe d'entraînement (34), l'organe d'entraînement (34) dépassant dans une rainure (35) prévue dans la paroi périphérique (28) de l'embrayage (21), la rainure (35) s'étendant dans la paroi périphérique (28) à partir d'un côté frontal (43) de ladite paroi périphérique (28) et présentant un fond de rainure (44) et deux côtés de rainure (45, 46) opposés,
**caractérisé en ce que** la paroi périphérique (28) présente sur le fond de rainure (44) une zone épaissie (47) dont l'épaisseur (a) correspond au moins à environ 110 % de l'épaisseur (c) de la paroi périphérique (28) sur les côtés de rainure (44, 45).

2. Instrument de travail selon la revendication 1,
**caractérisé en ce que** la largeur (b), mesurée parallèlement à l'axe de rotation (20) de l'embrayage (21), de la zone épaissie (47) est d'environ 0,8 mm à environ 2,0 mm.

3. Instrument de travail selon la revendication 1 ou 2,
**caractérisé en ce que** la longueur (d), mesurée dans le sens périphérique, de la zone épaissie (47) représente environ 50 % à environ 200 % de la largeur (e) de la rainure (35).

4. Instrument de travail selon l'une des revendications 1 à 3,
**caractérisé en ce que** le côté intérieur (40) de la paroi périphérique (28) sur le fond de rainure (44) est plus haut que le côté intérieur (40) sur les côtés de rainure (45, 46).

5. Instrument de travail selon la revendication 4,
**caractérisé en ce que** l'augmentation de hauteur (f) sur le côté intérieur (40) de la paroi périphérique (28) est d'environ 0,05 mm à environ 0,3 mm.

6. Instrument de travail selon l'une des revendications 1 à 5,
**caractérisé en ce que** le côté extérieur (37) de la paroi périphérique (28) est plus haut sur le fond de rainure (44) que le côté extérieur (37) sur les côtés de rainure (45, 46).

7. Instrument de travail selon la revendication 6,
**caractérisé en ce que** l'augmentation de hauteur (g) sur le côté extérieur (37) de la paroi périphérique (28) est d'environ 0,05 mm à environ 0,3 mm.

8. Instrument de travail selon l'une des revendications 1 à 7,
**caractérisé en ce que** la paroi périphérique (28), dans la zone (48) voisine des côtés de rainure (45 46), n'est pas épaissie.

9. Instrument de travail selon l'une des revendications 1 à 8,
**caractérisé en ce que** les côtés de rainure (45, 46), dans leurs zones (49, 50) voisines du côté frontal (43), s'étendent l'une vers l'autre suivant un angle (α) qui s'ouvre vers ledit côté frontal (43).

10. Instrument de travail selon la revendication 9,
**caractérisé en ce que** l'angle (α) est d'au moins environ 10°.

11. Instrument de travail selon l'une des revendications 1 à 10,
**caractérisé en ce que** les côtés de rainure (45, 46) sont disposés en miroir.

12. Instrument de travail selon l'une des revendications 1 à 11,
**caractérisé en ce que** l'élément entraîné est une pompe (30).

13. Instrument de travail selon l'une des revendications 1 à 12,
**caractérisé en ce que** l'instrument de travail comprend un dispositif de freinage (8) avec une bande de freinage (12) qui, pour le freinage, coopère avec le côté extérieur (37) de la paroi périphérique (28).

14. Instrument de travail selon l'une des revendications 1 à 13,
**caractérisé en ce que** l'embrayage (21) est un embrayage centrifuge avec au moins une masselotte (24), la masselotte (24), à l'état embrayé, étant appliquée contre le côté intérieur (40) de la paroi périphérique (28).

15. Procédé pour fabriquer une rainure dans la paroi périphérique d'un tambour d'embrayage d'un instrument de travail à main selon l'une des revendications 1 à 14,
**caractérisé en ce que** lors d'une première étape, la rainure (35) est réalisée par découpage avec une profondeur (k) qui correspond à environ 75% à environ 95% de la profondeur théorique (i) de la rainure (35), et avec une largeur (1) qui correspond à environ 50% à environ 110% de la largeur théorique (e), et **en ce que** le fond (44) de la rainure (35) est déformé plastiquement, lors d'une deuxième phase suivante, jusqu'à l'obtention de la profondeur théorique (i).

16. Procédé selon la revendication 15,
**caractérisé en ce que** la profondeur (k) de la rainure (35) découpée est inférieure de 2,0 mm au maximum à la profondeur théorique (i).
